# EUROPEAN PATENT SPECIFICATION

(11) **EP 4 527 723 B1**
(45) Date of publication and mention of the grant of the patent: **17.06.2026**
(21) Application number: 23382946.4
(22) Date of filing: 19.09.2023
(51) Int. Cl.: B62J 9/23, B62J 9/30, A45C 7/00

(54) **CASE FOR VEHICLES**
FAHRZEUGKOFFER
COFFRE POUR VÉHICULES

(43) Date of publication of application: 26.03.2025
(73) Proprietor: Nad, S.L., 08100 Mollet del Valles (Barcelona) (ES)
(72) Inventor: PUIGDOMENECH FRANQUESA, Anton Maria, 08100 MOLLET DEL VALLES (Barcelona) (ES); DOMENECH FONTANALS, Jordi, 08100 MOLLET DEL VALLES (Barcelona) (ES); AYALA GONZALEZ, Pere, 08100 MOLLET DEL VALLES (Barcelona) (ES); XICOLA SERRANO, Jaume, 08100 MOLLET DEL VALLES (Barcelona) (ES)
(74) Representative: Herrero & Asociados, S.L.

(56) References cited:
- WO-A1-2023/061726
- CN-U- 218 287 966
- DE-U1- 202020 003 514
- IT-A1- 202000 007 750

## Description

### Object of the invention

The present invention relates to a case for two- or three-wheeled vehicles, the interior volume of which can be extended at the user's will.

### Background to the invention

It is very common to use cases on motorbikes to store the user's belongings, e.g., a helmet.

These cases are placed on the rear of the motorbike or on the side of the motorbike and comprise a base provided with a lid, which can be locked onto the base by means of a key lock to prevent unintended opening of the case by an unauthorized user. Depending on the user's needs, he/she can choose cases of different dimensions, but usually motorbike cases have a fixed interior volume, which cannot be changed in case the user wants a larger volume on an ad hoc basis.

To solve this problem, there are already known cases that are extendable, i.e., a part of the base or lid has a flexible or telescopic portion that allows it to be extended, with the design limitations that this implies.

These variable volume cases fulfil their function of providing additional volume when required by the user but involve an additional cost for the manufacturer of such cases, as they require a mechanism to extend the additional portion of the case in a user-friendly manner.

Document WO2023/061726A1 discloses a known motorcycle case, showing all the features of the preamble of independent claim 1.

### Description of the invention

Therefore, an objective of the present invention is to provide a case for two- or three-wheeled vehicles that allows changing its volume and, at the same time, it is easy to use for the user.

With the case for two- or three-wheeled vehicles of the invention, the aforementioned disadvantages are solved, and there are other advantages which will be described below.

The case for two- or three-wheeled vehicles according to the present invention is described in claim 1, and the dependent claims include additional features that are optional.

According to the invention, the case for two- or three-wheeled vehicles comprises:
- a first casing part; and
- a second casing part,
   the first casing part being movable relative to the second casing part between an extended and a reduced position;
- traction cables which, when the first casing part is moved, cause the first casing part to move in a straight line relative to the second casing part.

That is, when a user moves the first casing part relative to the second casing part, the traction cables allow the entire first casing part to move in a straight line.

This straight line is substantially horizontal in the position of use of the case when the case is used on the side of a vehicle such as a motorbike.

Thanks to this feature, the change of position from the extended position to the reduced position, or vice versa, can be carried out by pushing or pulling from any point of the movable casing of the case, the movable part not rotating on itself, i.e., maintaining a parallel displacement, and without having to make use of any additional intermediary mechanism thanks to the presence of the traction cables. As a result, the user experience is simpler and more comfortable.

Preferably, the first and second casing parts are connected to each other by means of a movable element, comprising guides.

In addition, the traction cables are mounted on the movable element.

According to a preferred embodiment, one end of each traction cable is attached to one of the guides, and the other end of each traction cable is attached to another of the guides.

Preferably, the traction cables cross each other, and according to a preferred embodiment, each traction cable comprises a first section, an inclined section and a second section, wherein the traction cables cross at a midpoint in their inclined sections.

The case for vehicles according to the present invention also preferably comprises at least one locking lever which is connected with a slider, so that actuation of the lever allows the slider to be moved.

In addition, the slider is preferably complemented by stops, the stops blocking or releasing the movement of the slider and the movable element, since the slider and the movable element are mutually interdependent.

### Brief description of the drawings

For a better understanding of what has been explained above, some drawings are included in which, schematically and only by way of a non-limiting example, a practical case of embodiment is represented.
Figures 1 and 2 are perspective views of the case for vehicles according to the present invention, in its reduced and extended position, respectively;
Figure 3 is a perspective view of the traction cables of the case for vehicles according to the present invention, according to a first embodiment;
Figures 4 to 9 are schematic views of possible different arrangements of the traction cables of the case for vehicles according to the present invention;
Figures 10 and 11 are perspective views of a first casing part of the case according to the present invention, in its extended position and its reduced position, respectively;
Figures 12 and 13 are perspective views showing the locking lever of the traction cables and its locking system, in their extended and reduced positions, respectively; and
Figures 14 and 15 are sectional elevation views of a part of the case according to the present invention, in its reduced and extended position, respectively.

### Description of a preferred embodiment

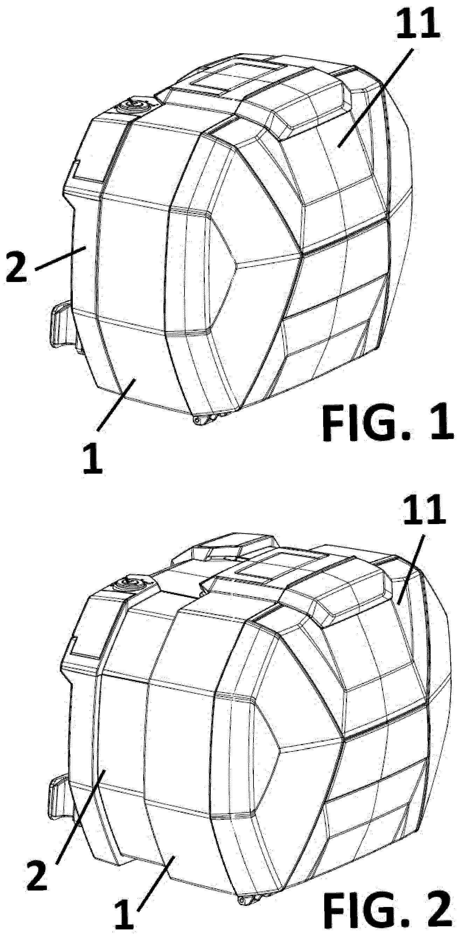

Figures 1 and 2 show the case for vehicles according to the present invention in its reduced and extended position, respectively.

For this purpose, the case comprises a first casing part 1 and a second casing part 2, at least one of the parts being movable relative to the other.

According to a preferred embodiment, the first casing part 1 is provided with a cover 11 and the second casing part 2 is attached to a motorbike, so that the first casing part 1 is movable relative to the second casing part 2.

Traction cables 4, 5 cause the first casing part 1 to move in a straight line with respect to the second casing part 2 when the first casing part 1 is displaced, the displacement being carried out by a user of the case.

In addition, the case also comprises a movable element 10 provided with guides 3, which connect the first and second casing parts 1, 2, as will be described below.

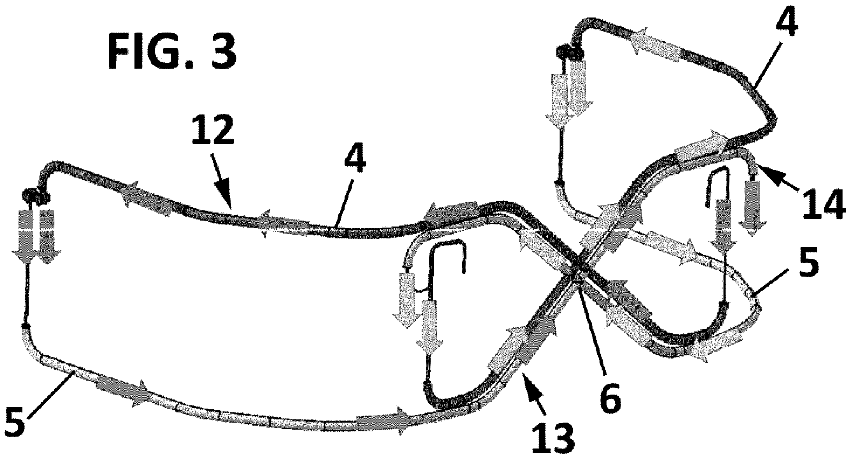

An arrangement of the traction cables 4, 5 is shown in more detail in figure 3. As can be seen in this figure, the traction cables 4, 5 are two pairs of traction cables.

It should be noted that the second pair of traction cables 5 is not essential, as the drive can be carried out by the first pair of traction cables 4 only, but it is preferable to use both pairs of traction cables to balance the forces exerted.

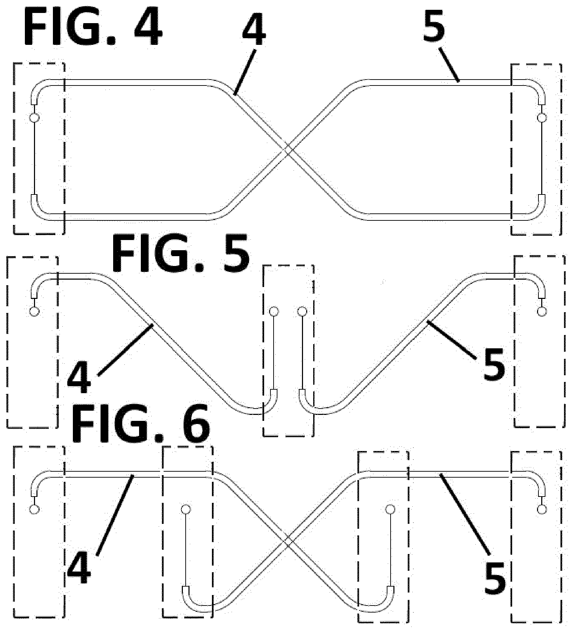

Figures 4 to 9 show different possible arrangements of the traction cables.

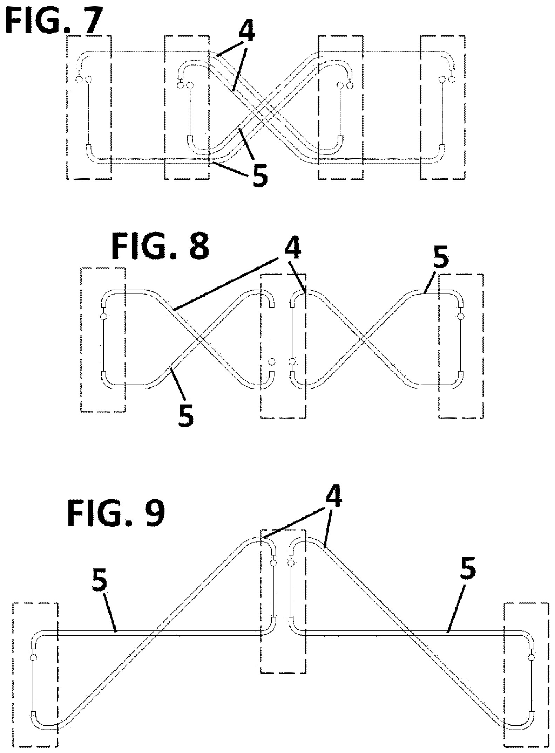

Specifically, figure 4 shows two traction cables crossing each other using two guides, figure 5 shows two traction cables crossing each other using three guides, figure 6 shows two traction cables crossing each other using four guides, figure 7 shows four traction cables crossing each other using four guides, figure 8 shows four traction cables in pairs, with the traction cables of each pair crossing each other using three guides, and figure 9 shows four traction cables in pairs, with the traction cables of each pair crossing each other in a different plane using three guides.

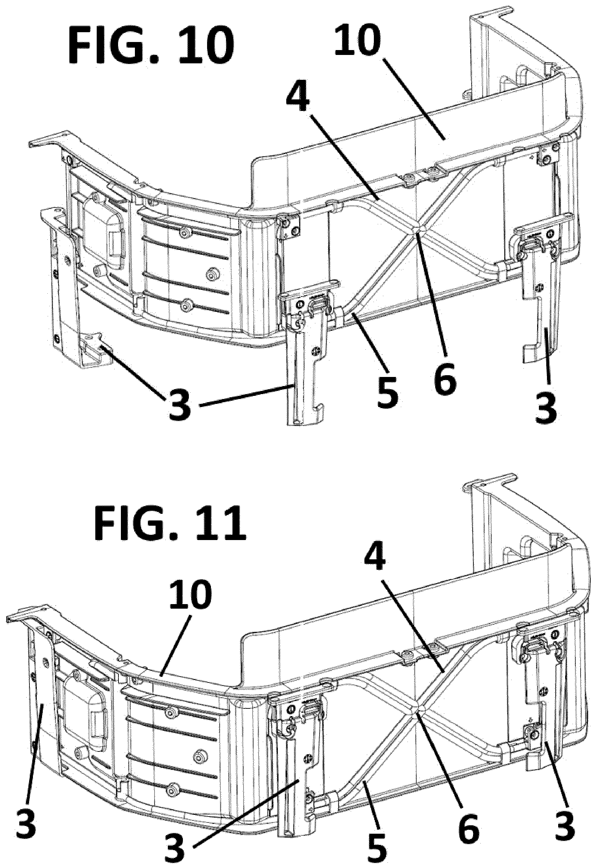

As can be seen in figures 10 and 11, the traction cables 4, 5 are arranged and extend in the first casing part 1, although they could be in the second casing part 2, and the two ends of each traction cable 4, 5 are attached to the guides 3, which, in turn, each of them is interdependent with the second casing part 2, although in the event that the traction cables 4, 5 were in the second casing part 2, they would be interdependent with the first casing part 1.

In this way, the actuation of the traction cables 4, 5 causes the displacement of the first casing part 1 relative to the second casing part 2.

As can best be seen in Figure 3, according to this embodiment, each traction cable 4, 5 comprises a first section 12, an inclined section 13 and a second section 14. In addition, all traction cables 4, 5 cross at a midpoint 6.

The traction cables 4, 5 are actuated manually from any point on the casing part 1.

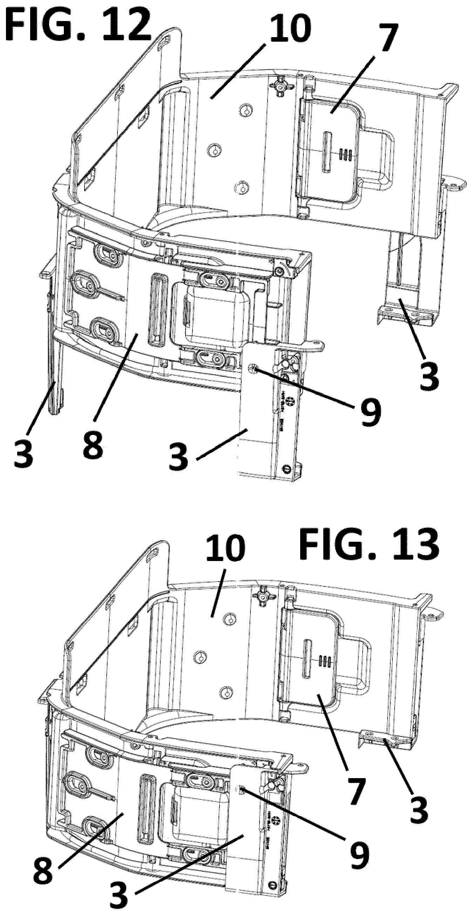

Figures 12 and 13 show the movable element 10, comprising locking levers 7, each connected to a slider 8, such that actuation of the locking lever 7 causes the slider 8 to move, as can be seen in Figures 12 and 13.

Furthermore, said slider 8 is complemented by stops 9, the stops 9 blocking or releasing the movement of the slider 8 and the movable element 10, since the slider 8 and the movable element 10 are mutually connected.

These stops 9 are movable from the locking position in the reduced position, shown in figure 13, to the locking position in the extended position, shown in figure 12, or vice versa.

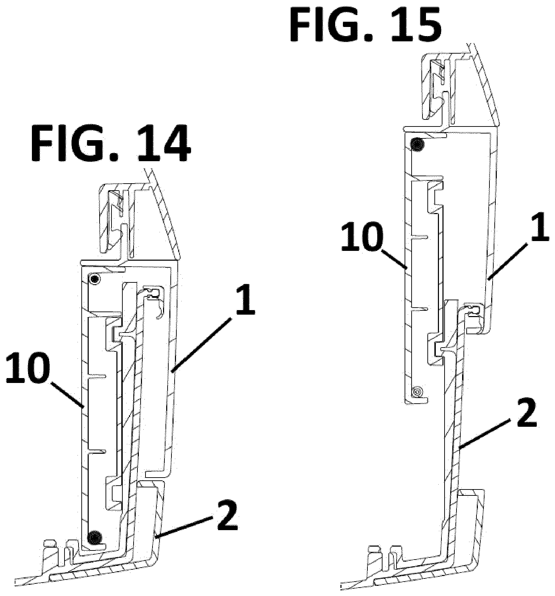

For ease of compression, the relative movement of the first and second casing parts 1, 2 and the movable element 10 is shown in figures 14 and 15, in the reduced and extended position, respectively.

The operation of the case for vehicles according to the present invention is as follows. When a user wishes to expand the capacity of the case, he/she simply actuates the levers 7, for example, located on the second casing part 1 or of the movable element 10 which releases the displacement of the first casing part 1 relative to the second casing part 2, and pulls the first casing part 1.

Thanks to the presence of the traction cables 4, 5, the first casing part 1 is moved in a straight line relative to the second casing part 2. In other words, when a user moves the first casing part 1 relative to the second casing part 2, the traction cables allow the whole of the first casing part 1 to move in a straight line.

This straight line is substantially horizontal in the position of use of the case when the case is used on the side of a vehicle such as a motorbike.

In addition, to lock the case in its extended position, the user must use the same locking levers 7 to position the sliders 8 by locking the stops 9, which are also present on the second casing part 2.

Although reference has been made to a specific embodiment of the invention, it is obvious to a person skilled in the art that the case for vehicles described is susceptible to numerous variations and modifications, without departing from the scope of protection defined by the appended claims.

## Claims

1. Case for two- or three-wheeled vehicles, comprising:
- a first casing part (1); and
- a second casing part (2),
the first casing part (1) being movable relative to the second casing part (2) between an extended and a reduced position;
**characterized in that** the case also comprises traction cables (4, 5), which, when the first casing part (1) is moved, cause the first casing part (1) to move in a straight line relative to the second casing part (2).

2. Case for vehicles according to claim 1, wherein the first and second casing parts (1, 2) are connected to each other by means of a movable element (10).

3. Case for vehicles according to claim 2, wherein the movable element (10) comprises guides (3).

4. Case for vehicles according to claims 1 and 2, wherein the traction cables (4, 5) are mounted on the movable element (10) or on the second casing part (2).

5. Case for vehicles according to claim 3, wherein one end of each traction cable (4, 5) is attached to one of the guides (3), and the other end of each traction cable (4, 5) is attached to another of the guides (3).

6. Case for vehicles according to claim 1 or 2, wherein the traction cables (4, 5) cross each other.

7. Case for vehicles according to any one of the preceding claims, wherein each traction cable (4, 5) comprises a first section (12), an inclined section (13) and a second section (14).

8. Case for vehicles according to claims 6 and 7, wherein the traction cables (4, 5) cross at a midpoint (6) at their inclined sections (13).

9. Case for vehicles according to any one of the preceding claims, comprising at least one locking lever (7) which is connected to a slider (8), such that actuation of the lever (7) allows the slider (8) to be moved.

10. Case for vehicles according to claim 9, wherein said slider (8) is complemented by stops (9), the stops (9) blocking or releasing the movement of the slider (8) and the movable element (10), the slider (8) and the movable element (10) being mutually supportive.

## Patentansprüche

1. Koffer für zwei- oder dreirädrige Fahrzeuge, umfassend:
- ein erstes Gehäuseteil (1); und
- ein zweites Gehäuseteil (2),
wobei das erste Gehäuseteil (1) gegenüber dem zweiten Gehäuseteil (2) zwischen einer ausgefahrenen Stellung und einer eingefahrenen Stellung verstellbar ist;
**dadurch gekennzeichnet, dass** der Koffer des Weiteren Zugseile (4, 5) umfasst, durch die sich das erste Gehäuseteil (1) bei einer Verstellung des ersten Gehäuseteils (1) in einer geraden Linie zu dem zweiten Gehäuseteil (2) bewegt.

2. Koffer für Fahrzeuge nach Anspruch 1, wobei das erste Gehäuseteil (1) und das zweite Gehäuseteil (2) über ein bewegliches Element (10) miteinander verbunden sind.

3. Koffer für Fahrzeuge nach Anspruch 2, wobei das bewegliche Element (10) Führungseinrichtungen (3) umfasst.

4. Koffer für Fahrzeuge nach Anspruch 1 und 2, wobei die Zugseile (4, 5) an dem beweglichen Element (10) oder an dem zweiten Gehäuseteil (2) gelagert sind.

5. Koffer für Fahrzeuge nach Anspruch 3, wobei jeweils ein Ende der Zugseile (4, 5) an einer der Führungseinrichtungen (3) befestigt ist und das andere Ende der Zugseile (4, 5) an einer anderen Führungseinrichtung (3) befestigt ist.

6. Koffer für Fahrzeuge nach Anspruch 1 oder 2, wobei die Zugseile (4, 5) einander kreuzen.

7. Koffer für Fahrzeuge nach einem der vorhergehenden Ansprüche, wobei die Zugseile (4, 5) jeweils einen ersten Abschnitt (12), einen schrägen Abschnitt (13) und einen zweiten Abschnitt (14) umfassen.

8. Koffer für Fahrzeuge nach Anspruch 6 und 7, wobei die Zugseile (4, 5) sich an ihren schrägen Abschnitten (13) in einem Mittelpunkt (6) kreuzen.

9. Koffer für Fahrzeuge nach einem der vorhergehenden Ansprüche, umfassend mindestens einen Arretierungshebel (7), der mit einem Gleitelement (8) derart verbunden ist, dass das Gleitelement (8) durch eine Betätigung des Arretierungshebels (7) verstellbar ist.

10. Koffer für Fahrzeuge nach Anspruch 9, wobei das Gleitelement (8) durch Anschläge (9) ergänzt ist, wobei die Anschläge (9) die Verstellung des Gleitelements (8) und des beweglichen Elements (10) blockieren oder freigeben, wobei das Gleitelement (8) und das bewegliche Element (10) aneinander gelagert sind.

## Revendications

1. Coffre pour véhicules à deux ou trois roues, comprenant :
- une première partie de boîtier (1) ; et
- une deuxième partie de boîtier (2),
la première partie de boîtier (1) étant mobile par rapport à la deuxième partie de boîtier (2) entre une position étendue et une position réduite ;
**caractérisé en ce que** le coffre comprend également des câbles de traction (4, 5), qui, lorsque la première partie de boîtier (1) est déplacée, amènent la première partie de boîtier (1) à se déplacer en ligne droite par rapport à la deuxième partie de boîtier (2).

2. Coffre pour véhicules selon la revendication 1, dans lequel les première et deuxième parties de boîtier (1, 2) sont reliées l'une à l'autre au moyen d'un élément mobile (10).

3. Coffre pour véhicules selon la revendication 2, dans lequel l'élément mobile (10) comprend des guides (3).

4. Coffre pour véhicules selon les revendications 1 et 2, dans lequel les câbles de traction (4, 5) sont montés sur l'élément mobile (10) ou sur la deuxième partie de boîtier (2).

5. Coffre pour véhicules selon la revendication 3, dans lequel une extrémité de chaque câble de traction (4,5) est fixée à l'un des guides (3), et l'autre extrémité de chaque câble de traction (4, 5) est fixée à un autre des guides (3).

6. Coffre pour véhicules selon la revendication 1 ou 2, dans lequel les câbles de traction (4, 5) se croisent entre eux.

7. Coffre pour véhicules selon l'une quelconque des revendications précédentes, dans lequel chaque câble de traction (4, 5) comprend une première section (12), une section inclinée (13) et une deuxième section (14).

8. Coffre pour véhicules selon les revendications 6 et 7, dans lequel les câbles de traction (4, 5) se croisent en un point médian (6) au niveau de leurs sections inclinées (13).

9. Coffre pour véhicules selon l'une quelconque des revendications précédentes, comprenant au moins un levier de verrouillage (7) qui est relié à un curseur (8), de sorte que l'actionnement du levier (7) permet de déplacer le curseur (8).

10. Coffre pour véhicules selon la revendication 9, dans lequel ledit curseur (8) est associé à des butées (9), les butées (9) bloquant ou libérant le mouvement du curseur (8) et de l'élément mobile (10), le curseur (8) et l'élément mobile (10) étant solidaires l'un de l'autre.
